# EUROPÄISCHE PATENTANMELDUNG

(11) **EP 0 713 126 A1**
(43) Veröffentlichungstag der Anmeldung: **22.05.1996**
(21) Anmeldenummer: 95117290.7
(22) Anmeldetag: 03.11.1995
(51) Int. Cl.: G02F 1/1347, G02F 1/1335, G02F 1/23, H04N 9/31

(54) **Farbige Anzeige mit in Serie angeordneten elektrisch steuerbaren Flüssigkristallfiltern**

(30) Priorität: 14.11.1994 CH 3407/94
(71) Anmelder: F. HOFFMANN-LA ROCHE AG, CH-4002 Basel (CH)
(72) Erfinder: Fünfschilling, Jürg, CH-4054 Basel (CH); Schadt, Martin, CH-4411 Seltisberg (CH); Seiberle, Hubert, D-79595 Rümmlingen (DE)
(74) Vertreter: Buntz, Gerhard

(57) **Zusammenfassung**

In der Anzeigevorrichtung werden Farben generiert, indem Licht durch drei hintereinander geschaltete, elektrisch gesteuerte Farbfilter geleitet wird, deren jeder eine von drei Farben abschwächen kann. Die Farbfilter bestehen aus je zwei cholesterischen Filtern (11,15), zwei λ/4-Platten (12,14) und einer Flüssigkristallanzeige (13).

## Beschreibung

Die Erfindung betrifft farbige Anzeigen, bei denen die Farben durch in Serie geschaltete, elektrisch steuerbare cholesterische Farbfilter erzeugt werden.

Bisher werden vor allem drei Methoden verwendet, um farbige Flüssigkristallanzeigen zu erzeugen.

Die erste und am häufigsten angewandte Methode wird vor allem für Direktsichtanzeigen (im Gegensatz zu Projektionssystemen) verwendet und beruht auf einer Farbfiltermatrix, bei der jeder Bildpunkt (jedes Pixel) in drei nebeneinander liegende Subpixel unterteilt wird, die jeweils mit einem roten, grünen oder blauen Filter versehen werden. Eine solche auf Lichtabsorption beruhende Farbfiltermatrix ist lichtschwach und verlangt eine dreimal grössere Anzahl angesteuerter Pixel als eine schwarzweisse Anzeige gleicher Auflösung.

Die zweite Methode ist nur für Projektionsanzeigen verwendbar. Das Licht der Projektionslampe wird dabei in separate Strahlengänge für die drei Grundfarben aufgeteilt. In den drei Strahlengängen befindet sich je eine Flüssigkristallanzeige. Die drei Bilder dieser Anzeigen werden durch geeignete Optik auf der Leinwand zur Deckung gebracht. Diese Methode ist rund dreimal lichtstärker als die erste, da die Unterteilung in Subpixel entfällt, zudem benötigt sie keine höhere Auflösung der Anzeige als eine entsprechende Schwarzweiss-Anzeige. Grosser Nachteil dieser Methode ist der nichtlineare Strahlengang, der die Optik gross, schwer und, weil aufwendig zu justieren, entsprechend teuer macht.

Bei einer dritten, noch nicht veröffentlichten Methode wird das Licht der beleuchtenden Lampe mit elektrisch schaltbaren Filtern sequentiell von rot zu grün zu blau geschaltet und die Anzeige synchron mit der der entsprechenden Farbe korrelierenden Bildinformation gespeist. Nachteile dieser Anordnung sind wieder die um den Faktor drei kleinere Lichttransmission (diesmal wegen der zeitlichen Farbabfolge) und die geforderte hohe Geschwindigkeit für den sequentiellen Bildaufbau.

Die vorliegende Erfindung kombiniert die Vorteile der obigen Methoden, ohne ihre Nachteile zu teilen. Insbesondere betrifft sie eine Anzeige mit einem äusserst kompakten, linearen Strahlengang, die lichtstark ist und keine erhöhte Geschwindigkeit der verwendeten Flüssigkristallanzeigen erfordert. Dabei werden cholesterische Flüssigkristallfilter sowohl als Farb- wie auch als Polarisationsfilter eingesetzt, d.h. die ganze Anordnung enthält keine absorbierenden Komponenten, was wesentlich zu ihrer Photostabilität beiträgt. Cholesterische Filter zeichnen sich auch durch grosse Helligkeit und Farbreinheit aus. Die Erfindung eignet sich besonders für Projektionssysteme, insbesondere auch für solche, die auf Hellraumprojektoren aufgelegt werden, aber auch Direktsichtanzeigen können damit realisiert werden. Ein weiterer Vorteil der Erfindung ist, dass sie mit der in EP-A-407 830 beschriebenen lichtstarken Beleuchtungsoptik kombiniert werden kann.

Im folgenden werden anhand der beiliegenden Zeichnungen mögliche Ausführungsbeispiele der Erfindung beschrieben. Es zeigen
Fig. 1 eine schematische Darstellung einer erfindungsgemässen Projektionsanzeige.
Fig. 2 im Detail ein sog. schaltbares Band-Block-Filter (SBBF)
Fig. 3 Messresultate für die Transmission eines SBBFs.

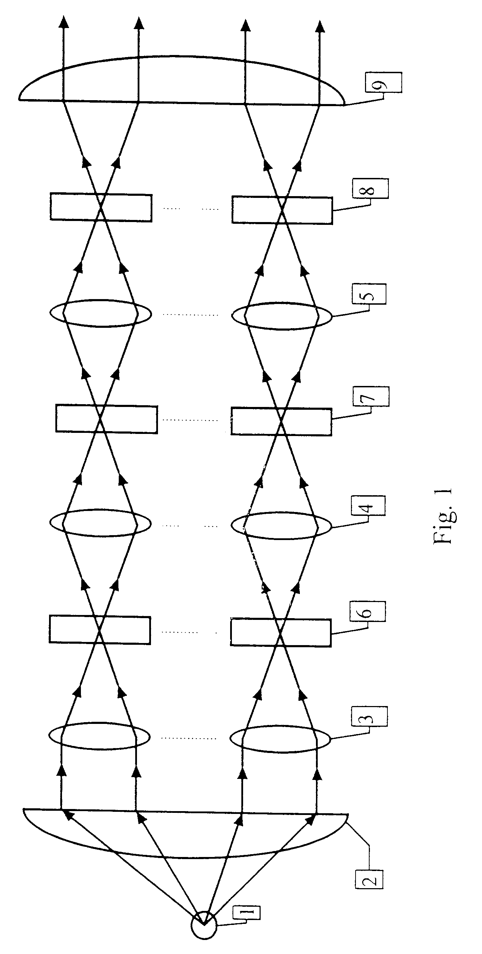

Die in Fig. 1 gezeigte Projektionsanzeige besteht aus einer Lampe 1, deren Licht durch die Kollektorlinse 2 in einem Parallelstrahl auf die Mikrolinsenmatrix 3 geworfen wird. Eine solche Mikrolinsenmatrix wurde z.B. von H. Hamada et al., Society for Information Display (SID) Digest 1992, Seite 269, beschrieben. Die Linsenmatrix fokussiert das Licht auf jedes Pixel des schaltbaren Band-Block-Filters (SBBFs) 6. Die Funktion dieses unten näher beschriebenen SBBFs ist es, pixelweise eine der Grundfarben rot, grün oder blau mehr oder weniger - gemäss der gewünschten Bildinformation - auszublenden (resp. zu reflektieren). Das restliche Licht wird durch die Mikrolinsen 4 auf das nächste SBBF 7 geworfen, das die zweite Grundfarbe mehr oder weniger ausblendet. Das restliche Licht wird noch einmal durch eine Mikrolinsenmatrix 5 auf ein drittes SBBF 8 fokussiert, wo die dritte Grundfarbe gemäss Bildinformation ausgeblendet wird, bevor es schliesslich durch die Projektionslinse 9 auf den Schirm projiziert wird.

Die Mikrolinsen dienen dazu, die Lichtausbeute zu erhöhen. Neben Mikrolinsen des zitierten Typs können auch holographische Streumuster, Fresnellinsen oder Matrix-Anordnungen von "Graded Index" Linsen eingesetzt werden. Sind die Pixel genügend gross im Verhältnis zum Abstand der SBBFs, dass bei der gewünschten Strahldivergenz kein untolerierbarer Parallaxfehler auftritt, können die Mikrolinsen auch weggelassen werden. Falls der Strahlengang konisch ist, wie z.B. bei Hellraumprojektoren mit Fresnellinsen, kann die Grösse der drei LCDs auch leicht verschieden gewählt werden, um sie optimal dem Strahlengang anzupassen.

Den SBBFs ähnliche Anordnungen sind in US Pat 4,726,663 beschrieben. Neu an der vorliegenden Erfindung ist das pixelweise Schalten der Farbe, das eine dreimal hellere Anzeige liefert und zudem keine schwer zu erfüllende Anforderungen an die Geschwindigkeit der Flüssigkristallzelle stellt. Dieser prinzipielle Vorteil der Erfindung lässt sich wie folgt erklären: Die während einer Bildperiode einfallende Lichtmenge sei aus neun Teilen zusammengesetzt, drei für jede Farbe, aufgeteilt in drei Subperioden. Im ganzen steht also die Lichtmenge 3R+3G+3B zur Verfügung (bei Beschränkung auf die verwendbare Polarisation, alle diskutierten Verfahren verlieren 50% des Lichtes, weil sie mit nur einer Polarisation arbeiten). Will man helles Weiss darstellen, betreibt man in der vorliegenden Erfindung die drei SBBFs 6-8 in ihrem Durchlassbereich während der ganzen Periode, d.h. das transmittierte Licht ist (3R+3G+3B), wogegen bei sequentiellen Filtern die Transmission im ersten Periodendrittel R, im zweiten G und im dritten B, im ganzen also(R+G+B) ist, d.h. dreimal kleiner als bei der vorliegenden Erfindung. Ganz analog kann man den Fall des in drei farbige Subpixel aufgeteilten Pixels behandeln: helles Weiss bedeutet, dass je 1/3 eines Pixels rot, grün und blau ist, das Gesamtsignal also wieder (R+G+B), d.h. dreimal kleiner als bei der vorliegenden Erfindung. Dies gilt auch, wenn die Subpixel durch cholesterische Filter gebildet werden, wie in der reflektiven Anzeige, die in EP-A- 600 349 beschrieben wird.

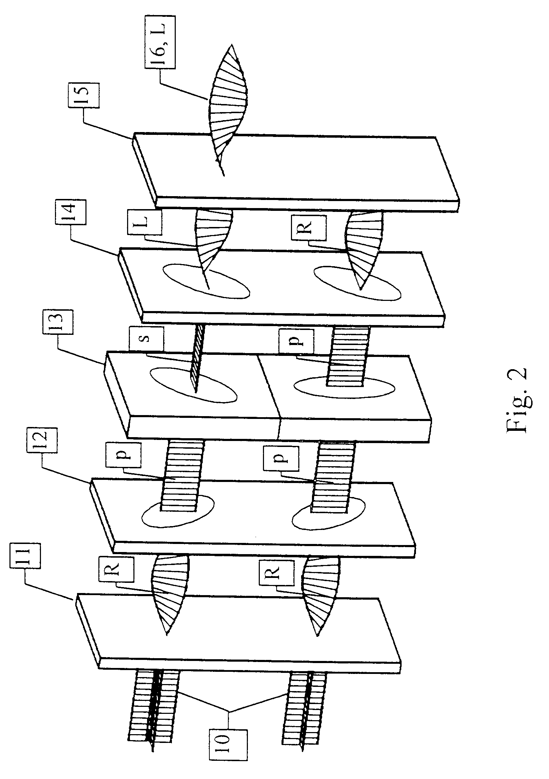

Fig. 2 zeigt den Aufbau eines SBBFs. Dargestellt sind zwei mögliche Schaltzustände, nämlich ganz dunkel (untere Hälfte der Figur) und ganz hell (obere Hälfte). Für andere Steuerspannungen an der Flüssigkristallzelle 13 ergeben sich beliebige Zwischentöne. Das SBBF besteht aus einem cholesterischen Filter 11, den λ/4-Platten 12 und 14, der Flüssigkristallzelle 13 und dem cholesterischen Filter 15.

Die Konstruktion eines cholesterischen Filters und mögliche monomere und polymere cholesterische Flüssigkristalle sind z.B. aus M. Schadt et al., Jpn. J. Appl. Phys. 29, No 10 (1990) S. 1974 ff. oder aus R. Maurer et al., SID 1990 Digest, S. 110 - 113 bekannt. Wichtigste Eigenschaft von cholesterischen Filtern ist, dass sie eine zirkulare Polarisationskomponente des einfallenden Lichtes innerhalb eines gewissen Wellenlängenbereiches (des selektiven Reflexionsbandes) reflektieren und alles andere Licht im wesentlichen ungeschwächt durchlassen. Je nach Drehsinn des verwendeten cholesterischen Flüssigkristalls wird dabei die rechte oder die linke Zirkularpolarisation reflektiert (R- bzw. L-Filter). Ebenso können durch Ganghöhe und Doppelbrechung des cholesterischen Flüssigkristalls Position und Breite des selektiven Bandes in bekannter Weise gewählt werden.

Fig. 2 zeigt nur den Polarisationszustand des Lichtes innerhalb des selektiven Bandes, der Polarisationszustand von natürlichem, unpolarisiertem Licht ausserhalb des selektiven Bandes wird nicht geändert. Unpolarisiertes Licht 10 innerhalb des selektiven Bandes fällt auf das cholesterische L-Filter 11. Nur R-polarisiertes Licht wird transmittiert, die L-Polarisation wird reflektiert und kann gemäss EP - A - 407 830 zur Erhöhung der Lichtausbeute verwendet werden. Das durchgelassene R-Licht wird durch die λ/4-Platte 12 in linear polarisiertes Licht ("p" für parallel zur Vertikalen polarisiert, "s" bedeutet senkrecht darauf) umgewandelt. Die Flüssigkristallzelle 13 kann das Licht mehr oder weniger elliptisch polarisieren, die beiden gezeigten Grenzfälle "p" und "s" sind Spezialfälle davon. Die vielen möglichen Typen von Flüssigkristallzellen, die diese Funktion erfüllen können, sind weiter unten aufgezählt. Nach der Flüssigkristallzelle 13 trifft das Licht wieder auf eine λ/4-Platte 14 und ein cholesterisches R-Filter 15.

Im oberen Strahlengang dreht die Flüssigkristallzelle 13 die p-Polarisation um 90° zu s. In der Figur ist dies angedeutet durch eine um 45° zur Vertikalen verkippte λ/2-Platte, es könnte aber auch eine Twisted Nematic (TN) Zelle im polarisationsführenden Modus sein. Die s-Polarisation nach der Zelle 13 wird durch die λ/4-Platte 14 in L-zirkularpolarisiertes Licht verwandelt, das von dem cholesterischen R-Filter 15 ungeschwächt durchgelassen wird, d.h. das Filter ist im Hellzustand (16).

Im unteren Strahlengang bleibt die p-Polarisation beim Durchgang durch die Flüssigkristallzelle 13 erhalten. In der Figur ist dies dadurch angedeutet, dass die eine Hauptachse der Doppelbrechung parallel zur Polarisation steht. Die gleiche optische Wirkung hätte aber eine homöotrop orientierte Flüssigkristallschicht. Nach der Zelle 13 wird das Licht von der λ/4-Platte 14 in R-zirkularpolarisiertes Licht verwandelt. Dieses Licht kann das cholesterische R-Filter 15 nicht passieren. Der untere der beiden Strahlengänge entspricht also dem Dunkelzustand des Filters. Die Zwischenzustände entsprechen Grauwerten, respektive verschiedenen Farbkoordinaten.

Das in Fig. 2 gezeigte SBBF hat also genau die in Fig. 1 von den Filtern 6, 7 und 8 verlangte Eigenschaft, dass es ein Wellenlängenband mehr oder weniger ausblenden kann.

Das nicht transmittierte, vom Filter 15 reflektierte Licht darf vor allem im Dunkelzustand nicht wieder von irgendwelchen Schichten (z.B. Elektrodenschichten der Flüssigkristallzelle 13) nochmals zurückreflektiert werden, da sonst der Kontrast stark reduziert werden kann. Da sich solche Reflexionen aber nie ganz vermeiden lassen, muss dafür gesorgt werden, dass dieses reflektierte Licht so polarisiert ist, dass es das Filter 15 nicht passieren kann, also R-zirkularpolarisiert ist. Dies zu bewirken ist die Funktion der λ/4-Platte 14, da sie das reflektierte R-Licht wieder in linear polarisiertes Licht verwandelt, bevor irgendwelche Reflexionen an Kontakten stattfinden können. Falls dann diese Reflexionen z.B. an der Zelle 13 doch stattfinden, sind sie immer noch linear polarisiert und werden durch den Durchgang durch die λ/4-Platte 14 wieder R-polarisiert. Fehlt die λ/4-Platte 14, so wird das R-Licht bei einer Reflexion an 13 in L-Licht verwandelt und kann das Filter 15 passieren. Die λ/4-Platte 14 ist also ausschlaggebend zur Erreichung hoher Kontrastwerte. Sie fehlt z.B. in der schaltbaren Farbfilteranordnung von S. Sato und M. Wada (IEEE TRANSACTIONS ON ELECTRON DEVICES, Bd. ED-21, Nr.2, Februar 1974, NEW YORK US, Seiten 171-172).

Im Gegensatz zur sequentiellen Ansteuerung wird an die Polarisationseigenschaften des vom SBBF transmittierten Lichtes keine Anforderung gestellt, da nur dessen Intensität wichtig ist. Es lässt sich also auch ein SBBF mit identischen cholesterischen Filtern 11 und 15 aufbauen. Je nach dem, wie die Orientierung der Elemente 12-14 gewählt wird, werden dabei hell und dunkel vertauscht. Für den Fachmann ist es klar, dass es mehrere mögliche Orientierungen der Flüssigkristallzelle 13 und der λ/4-Platten 12 und 14 gibt, die im wesentlichen gleiche Eigenschaften zeigen wie das Ausführungsbeispiel in Fig. 2.

Die charakteristischen optischen Eigenschaften cholesterischer Filter (scharfe Filterkanten, rein dielektrischer Effekt ohne Absorption) liefert helle, photostabile Anzeigen mit hervorragender Farbsättigung. Dies im Gegensatz etwa zu Anzeigen auf der Basis von dichroitischen Farbstoffen ( vgl. EP-A-509 727), die schwächere Farbsättigung aufweisen und wegen ihrer Absorption auch wenig photostabil sind.

Als elektrooptische Zelle 13 eignen sich eine ganze Reihe von Flüssigkristallzellen. Sie müssen die Bedingung erfüllen, dass sie eine vorgegebene lineare Polarisation (p in Figur 2) mehr oder weniger (je nach angelegter Spannung) elliptisch machen können, wobei für optimalen Kontrast die beiden Grenzfälle - 1. keine Änderung der Polarisation und 2. Drehung der Polarisation um 90° - eingeschlossen sein sollten. Zusätzlich muss es möglich sein, alle gewünschten Bildelemente (im Extremfall eine zweidimensionale Matrix mit mehreren Millionen Pixeln) mit geeigneten Methoden mit der gewünschten Bildrate modulieren zu können. Diese Modulation kann sowohl durch direktes Ansteuern, durch Multiplexieren (incl. dem sog. "Active Addressed"-Multiplexieren) wie auch mit Hilfe einer aktiven Matrix erfolgen. Beispiele für diese LCDs sind TN- LCDs, STN- LCDs, ECB- LCDs, DAP-LCDs, OMI- LCDs, polymerdispergierte LCDs, -Zellen, ferner DHF- LCDs und andere ferroelektrische LCDs, mit denen Grauwerte generiert werden können (z.B. ladungsgesteuerte SSF-LCDs, SBF-LCDs oder antiferroelektrische LCDs).

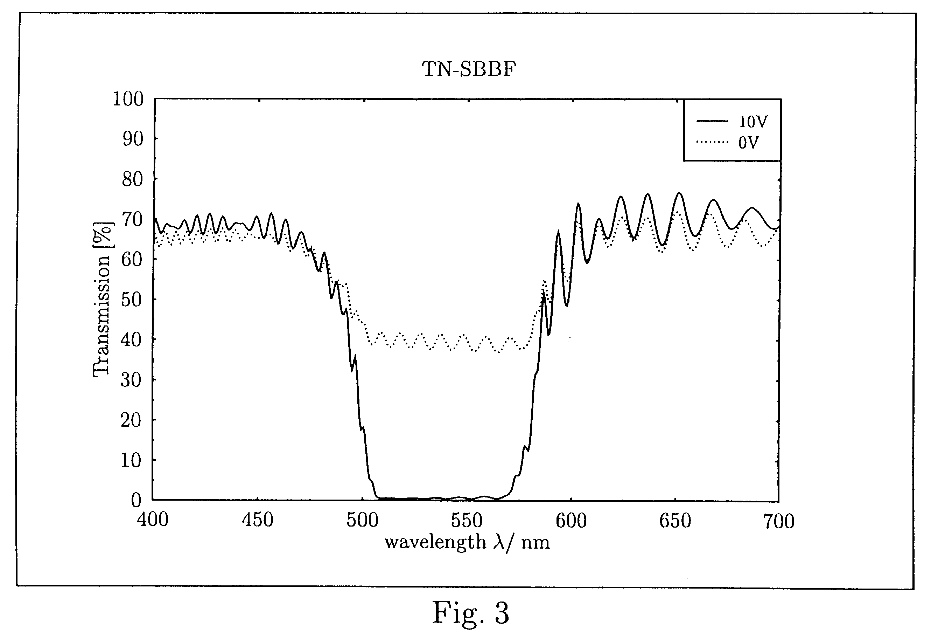

Fig. 3 zeigt das Transmissionsspektrum eines SBBFs gemäss Fig. 2 für unpolarisiertes Licht. Die cholesterischen Filter 12 und 14 bestehen je aus zwei mit Polyimid beschichteten, geriebenen Glasplatten von 8 m Abstand mit einer cholesterischer Flüssigkristallmischung mit geeigneter Doppelbrechung und Ganghöhe der cholesterischen Helix dazwischen. Die Konstruktion solcher Zellen ist z.B. aus M. Schadt et al., Jpn. J. Appl. Phys. 29, No 10 (1990) S. 1974 ff. bekannt. Die Flüssigkristallzelle 13 ist eine gängige TN-Zelle. Die λ/4-Platten sind kommerzielle Retarderfolien mit einer Gangdifferenz von 140 nm. Alle Bauteile sind mit optischem Leim verklebt. In Fig. 3 ist das Transmissionspektrum im Hellzustand ( 0V an der Zelle) und im Dunkelzustand (10 Vpp, 1kHz Rechteck an der Zelle) dargestellt. Deutlich sichtbar ist der gute Kontrast und die scharfe Filtercharakteristik.

Hauptanwendungsgebiete für die vorliegende Erfindung sind einerseits sehr kompakte, hochinformative Flüssigkristall-Projektionsanzeigen, etwa für High-Definition TV-Projektoren (Version mit Mikrolinsen), oder Anzeigen mit grösseren Pixeln oder anderen Bildelementen ohne Mikrolinsen, bei denen die Helligkeit und Farbqualität der vorliegenden Erfindung zu wesentlichen Verbesserungen führt. In keinem der beiden Fälle werden Anforderungen an die Flüssigkristallzellen gestellt, die nicht schon mit heute kommerzialisierten Anzeigen zu erfüllen wären - im Gegensatz etwa zu sequentiell angesteuerten Anzeigen, wo die Geschwindigkeit heutiger Anzeigen noch nicht ausreicht. Ferner sind auch Direktsichtanzeigen auf der Basis der vorliegenden Erfindung möglich (die Projektionslinse 9 in Fig. 1 fehlt dann). Allerdings tritt wegen der charakteristischen Winkelabhängigkeit der selektiven Reflexion eine gewisse Beschränkung des Blickwinkelbereiches auf.

## Patentansprüche

1. Elektrisch steuerbare, farbige, helle Anzeigevorrichtung mit kompakter, linearer Lichtführung gekennzeichet dadurch, dass drei schaltbare Farbfilter, die aus je zwei cholesterischen Filtern, zwei λ/4-Platten und einer elektrisch schaltbaren Flüssigkristallanzeige mit segmentierten Elektroden bestehen und die je eine von drei verschiedenen Farben elektrisch gesteuert abschwächen können, optisch in Reihe geschaltet sind.

2. Anzeige gemäss Anspruch 1, dadurch gekennzeichnet, dass vor jedem der Filter eine Matrix von Mikrolinsen, von holographischen Linsen, Fresnellinsen oder von "Graded Index" Linsen angeordnet ist.

3. Anzeige gemäss Anspruch 1 oder 2, dadurch gekennzeichnet, dass die in den Filtern verwendeten Flüssigkristallzellen von einem der folgenden Typen sind: TN-LCD, STN-LCD, ECB- LCD, DAP- LCD, OMI- LCD, polymerdispergiertes LCD, -Zelle; ferner DHF-Zelle oder eine andere ferroelektrische Zelle, die Grauwerte generieren kann (z.B. ladungsgesteuerte SSF-LCDs, SBF-LCDs oder antiferroelektrische LCDs).

4. Anzeige gemäss Anspruch 1-3, dadurch gekennzeichnet, dass die Anzeige eine Projektionsanzeige darstellt.

5. Anzeige gemäss Anspruch 1-3, dadurch gekennzeichnet, dass die Anzeige als Projektionsaufsatz für einen Hellraumprojektor ausgebildet ist.

6. Anzeige gemäss Anspruch 1-3, dadurch gekennzeichnet, dass die Anzeige eine Direktsicht-Anzeige darstellt.
